# EUROPÄISCHE PATENTSCHRIFT

(11) **EP 2 469 822 B1**
(45) Veröffentlichungstag und Bekanntmachung des Hinweises auf die Patenterteilung: **31.07.2019**
(21) Anmeldenummer: 11007818.5
(22) Anmeldetag: 26.09.2011
(51) Int. Cl.: H04M 3/42, H04M 7/00

(54) **Computer-Telephonie-Integration mit Anbindung der Computer über einen Presence-Server**
Computer-Telephone-Integration whereby the computers are connected via a presence server
Intégration ordinateur-téléphone dans laquelle les ordinateurs sont connectés par l'intermédiaire d'un serveur de présence

(30) Priorität: 23.12.2010 EP 10016049
(43) Veröffentlichungstag der Anmeldung: 27.06.2012
(73) Patentinhaber: Unify GmbH & Co. KG, 80807 München (DE)
(72) Erfinder: Rist, Claus, 44795 Bochum (DE); Cordes, Sebastian, 58642 Iserlohn (DE); Winter, Johannes, 1090 Wien (AT); Ransmayr, Viktor, 80686 München (DE)
(74) Vertreter: Fritzsche, Thomas

(56) Entgegenhaltungen:
- WO-A1-2005/074233
- WO-A2-2008/103934
- US-A1- 2007 064 672
- WU CHOU ET AL: "Web Services for Service-Oriented Communication", COLLABORATIVE COMPUTING: NETWORKING, APPLICATIONS AND WORKSHARING, 200 6. COLLABORATECOM 2006. INTERNATIONAL CONFERENCE ON, IEEE, PI, 1. November 2006 (2006-11-01), Seiten 1-8, XP031089531, ISBN: 978-1-4244-0428-5
- ANONYMOUS: "XML Protocol for Computer Supported Telecommunications Applications (CSTA) Phase III", STANDARD ECMA,, Bd. 5th Edition, Nr. ECMA-323, 1. Juni 2009 (2009-06-01), Seiten 1-636, XP007920249,

## Beschreibung

Die Erfindung betrifft ein Verfahren zur automatischen Überwachung einer Verbindung (CTI-L) eines Vermittlungssystems (PBX) in einem Telekommunikationsnetz (TN) mit einem Datennetz (DN), bei dem ein Vermittlungssystem (PBX) des Telekommunikationsnetzes mit einem IM-Server (XS) des Datennetzes über eine Gateway (CCGW) verbunden wird, mit deren Hilfe der IM-Server in die Lage versetzt wird, Computer-Telefonie-Integrations-Dienste des Vermittlungssystems (PBX) einem Kommunikationsteilnehmer des Datennetzes zur Verfügung zu stellen.

Datennetze dienen hauptsächlich der Vernetzung von Computern, beispielsweise von PCs mit sogenannten Servern. Verfahren und Anordnungen, bei denen auf Computern installierte Anwendungen Kommunikationsanlagen und Kommunikationsverbindungen steuern und überwachen, sind allgemein als CTI-Lösungen (CTI = Computer Telephony Integration) bekannt. Dabei können einerseits Anschlüsse von Kommunikationsanlagen und andererseits Verbindungen zwischen den Anschlüssen gesteuert und überwacht werden. Bei den Verbindungen handelt es sich jeweils um temporäre Kommunikationskanäle zwischen zwei oder mehreren Teilnehmern einer Kommunikationsanlage oder mehrerer Kommunikationsanlagen.

Beim Betrieb einer CTI-Lösung werden jeweils Daten mit Steuer- und Zustandsinformationen zwischen einer Kommunikationsanlage und einer CTI-Anwendung (CTI-Anwendungsprogramm) übertragen. Dazu verfügen die Kommunikationsanlagen über spezielle Schnittstellen zum Austausch der Daten, die CTI-Schnittstellen. Ebenso verfügen die Anwendungen bzw. die PCs über eine entsprechende CTI-Schnittstelle für diesen Datenaustausch. Hierzu sind die CTI-Schnittstellen der Kommunikationsanlage und die der Anwendung über eine Datenleitung oder über ein Datennetz miteinander verbunden. Da die maximale Anzahl von CTI-Schnittstellen an einer Kommunikationsanlage beschränkt ist, wird zwischen der Kommunikationsanlage und den Anwendungen ein häufig ein Telefonie-Server geschaltet.

Die Druckschrift WO 98/51092 A1 "Computer telephony integration gateway" zeigt ein öffentliches Kommunikationsnetzwerk mit mehreren Kommunikationsanlagen und ein privates Kommunikationsnetzwerk mit mehreren Domänen, die jeweils Rechner mit Anwendungen zur Steuerung und/ oder Überwachung von Ressourcen des öffentlichen Kommunikationsnetzwerks aufweisen. Die gezeigte Anordnung weist als Umwertungseinrichtung einen "CTI-Gateway" auf, welches die zur Steuerung und/oder Überwachung der Ressourcen vom öffentlichen Kommunikationsnetzwerk zum privaten Kommunikationsnetzwerk versendeten Daten derart verändert, dass sich diese Daten als die Daten einer einzigen öffentlichen Kommunikationsanlage darstellen, und umgekehrt die Daten, die vom privaten Kommunikationsnetzwerk mit den Anwendungen zum öffentlichen Kommunikationsnetzwerk versendet werden, derart verändert, als ob sie aus einem privaten Kommunikationsnetzwerk mit nur einer Anwendung gesendet worden wären.

Die DE 000010159636 B4 beschreibt ein Verfahren zur Steuerung und/oder Überwachung von Ressourcen und Verbindungen mittels Austausch von Daten zwischen Kommunikationsanlagen und mindestens einer Anwendung, wobei die Daten jeweils ein die Ressourcen und Verbindungen unterscheidendes Kennzeichen aufweisen, wobei die Kennzeichen der Ressourcen beim Austausch jeweils derart umgewertet werden, dass sie sich für die eine oder jede Anwendung als Kennzeichen einer einzigen Kommunikationsanlage mit Teilnehmeranschlüssen darstellen, dadurch gekennzeichnet, dass die Kennzeichen der Verbindung zwischen Ressourcen von verschiedenen Kommunikationsanlagen jeweils eine lokale Verbindungsnummer (Call-ID) der an der Verbindung beteiligten Kommunikationsanlagen und eine globale Verbindungsnummer (Call-ID) umfassen und dass durch die Umwertung die globale Verbindungsnummer (Call-ID) so zur Anwendung übertragen wird, dass diese von der Anwendung nicht von einer lokalen Verbindungsnummer (Call-ID) unterscheidbar ist.

Die US 2007/064672 A1 offenbart ein Verfahren zur Steuerung und Überwachung einer gemeinsamen PBX Telefonleitung durch eine Mehrzahl von Personal Computern mit mehrfachen Instanzen einer SIP Softphone Anwendung.

Die Veröffentlichung WU CHOU ET AL: "Web Services for Service-Oriented Communication", COLLABORATIVE COMPUTING: NET-WORKING, APPLICATIONS AND WORKSHARING, 2006, COLLABORATECOM 2006, INTERNATIONAL CONFERENCE ON, IEEE, PI, 1. November 2006 (2006-11-01), Seiten 1-8, XP031 089531, ISBN: 978-1-4244-0428-5 offenbart Verfahren zu Web-Diensten für eine Service-orientierte Kommunikation.

Die WO 2005/074233 A1 offenbart ein Verfahren und eine Vorrichtung, mit denen digitalen Telefonanlagen eine Instant Messaging Funktion zur Verfügung gestellt werden kann.

Die Veröffentlichung "XML Protocol for Computer Supported Telecommunications Applications (CSTA) Phase III", STANDARD ECMA" Bd. 5th Edition, Nr. ECMA-323, 1. Juni 2009 (2009-06-01), Seiten 1-636, XP007920249, offenbart einen Telekommunikations-Standard der European association for standardizing information and communication systems (ECMA).

Eine Aufgabe der vorliegenden Erfindung kann darin gesehen werden, andere Lösungen für die Überwachung einer Verbindung eines Vermittlungssystems in einem Telekommunikationsnetz (TN) mit einem Datennetz (DN) anzugeben. Diese Aufgabe wird durch ein Verfahren nach Anspruch 1 gelöst. Vorteilhafte Weiterbildungen der Erfindung sind Gegenstand von Unteransprüchen.

Erfindungsgemäß ist ein Verfahren zur automatischen Überwachung einer Verbindung (CTI-L) eines Vermittlungssystems (PBX) in einem Telekommunikationsnetz (TN) mit einem Datennetz (DN) vorgesehen, bei dem ein Kommunikationsteilnehmer des Datennetzes als XMPP-Client über eine Computer-Telefonie-Integrations-Dienst-Verbindung (CTI-L) mit einem XMPP-Server des Datennetzes verbunden ist, und bei dem ein Vermittlungssystem (PBX) des Telekommunikationsnetzes mit einem IM-Server (XS) des Datennetzes über ein Gateway (CCGW) verbunden wird, das mittels CSTA XML an das Vermittlungssystem (PBX) angebunden wird und mit deren Hilfe der XMPP-Server in die Lage versetzt wird, Computer-Telefonie-Integrations-Dienste des Vermittlungssystems (PBX) dem XMPP-Client zur Verfügung zu stellen. Computer-Telefonie-Integrations-Dienste und Nachrichten werden mit Hilfe eines Request/Response-Mechanismus übertragen, der im Fehlerfall eine Fehlermeldung an den Absender vorsieht.

Dabei werden IQ-Stanzas oder direkte Präsenznachrichten ("direct presence") für den Request/Response-Mechanismus verwendet, wobei im Falle, dass die Verbindung zwischen XMPP-Server und dem XMPP-Client nicht mehr vorhanden ist, auf eine IQ-Stanza-Request des Gateways (CCGW) der XMPP-Server anstelle des XMPP-Clients ein IQ-Stanza vom typ "error" mit dem Wert "service unavailable" als Antwort aussendet.

Gemäß einer bevorzugten Ausführungsform der vorliegenden Erfindung, deren Merkmale auch mit Merkmalen anderer Ausführungsformen kombiniert werden können, ist ein Verfahren vorgesehen, bei dem der XMPP-Server in die Lage versetzt wird, Computer-Telefonie-Integrations-Dienste des Vermittlungssystems (PBX) einem Kommunikationsteilnehmer des Datennetzes zur Verfügung zu stellen, indem er einen XMPP-Client (XC) in die Lage zu versetzt, solche Computer-Telefonie-Integrations-Dienste des Vermittlungssystems (PBX) zu abonnieren.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem das Gateway (CCGW) eine Zuordnung zwischen einer CSTA-spezifischen InvokeID (CSTA-IID) einerseits und einem Jabber-Identifier (JID) des IM-Clients und/oder einer XMPP-SessionID (XSID) bewirkt.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem die Kommunikation zwischen dem Gateway (CCGW) und dem XMPP-Server als eine Server-Server-Anbindung ausgeführt wird.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem die Kommunikation zwischen dem Gateway (CCGW) und dem XMPP-Server als eine Server-Client-Anbindung ausgeführt wird.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem die Kommunikation zwischen dem Gateway (CCGW) und dem XMPP-Server über eine Serverkomponente gemäß XEP 0114 oder einem anderen zu XEP 0114 vergleichbaren Jabber-Component-Protocol ausgeführt wird.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem zur Zuordnung eines Requests zur zugehörigen Response die sogenannte Invoke-ID verwendet wird.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem die zur Zuordnung eines Requests zur zugehörigen Response verwendete Invoke-ID über alle Requests eindeutig ist.

Gemäß einer weiteren bevorzugten Ausführungsform der vorliegenden Erfindung, deren Merkmale auch mit Merkmalen anderer Ausführungsformen kombiniert werden können, ist ein Verfahren vorgesehen, bei dem zum Transport von CSTA über XMPP IQ-Stanzas verwendet werden, die einen Request-Response-Mechanismus aufweisen, der dem von CSTA verwendeten Request-Response-Mechanismus vergleichbar ist.

Gemäß einem weiteren Beispiel, dessen Merkmale auch mit Merkmalen anderer Ausführungsformen kombiniert werden können, ist ein Verfahren vorgesehen, bei dem ein IM-Client eine XMPP-Session-ID generiert, die von anderen XMPP-Session-IDs desselben IM-Clients verschieden ist.

Im Folgenden wird die Erfindung anhand bevorzugter Ausführungsbeispiele und mit Hilfe von Figuren näher beschrieben.

### Dabei zeigt

Fig. 1 in schematischer Weise eine erste Anordnung von Systemkomponenten zur Durchführung eines Ausführungsbeispiels eines erfindungsgemäßen Verfahrens;
Fig. 2 in schematischer Weise eine zweite Anordnung von Systemkomponenten zur Durchführung eines Ausführungsbeispiels eines erfindungsgemäßen Verfahrens;
Fig. 3 in schematischer Weise ein Ablaufdiagramm eines Bestandteils eines Ablaufs eines erfindungsgemäßen Verfahrens anhand eines bevorzugten Ausführungsbeipiels der Erfindung;
Fig. 4 in schematischer Weise ein Ablaufdiagramm eines Bestandteils eines Ablaufs eines erfindungsgemäßen Verfahrens anhand eines bevorzugten Ausführungsbeispiels der Erfindung;
Fig. 5 in schematischer Weise ein Ablaufdiagramm eines Bestandteils eines Ablaufs eines erfindungsgemäßen Verfahrens anhand eines bevorzugten Ausführungsbeispiels der Erfindung;
Fig. 6 in schematischer Weise ein Ablaufdiagramm eines Bestandteils eines Ablaufs eines erfindungsgemäßen Verfahrens anhand eines bevorzugten Ausführungsbeispiels der Erfindung;
Fig. 7 in schematischer Weise ein Ablaufdiagramm eines Bestandteils eines Ablaufs eines erfindungsgemäßen Verfahrens anhand eines bevorzugten Ausführungsbeispiels der Erfindung;
Fig. 8 in schematischer Weise ein Ablaufdiagramm eines Bestandteils eines Ablaufs eines erfindungsgemäßen Verfahrens anhand eines bevorzugten Ausführungsbeispiels der Erfindung;
Fig. 9 in schematischer Weise ein Ablaufdiagramm eines Bestandteils eines Ablaufs eines erfindungsgemäßen Verfahrens anhand eines bevorzugten Ausführungsbeispiels der Erfindung.

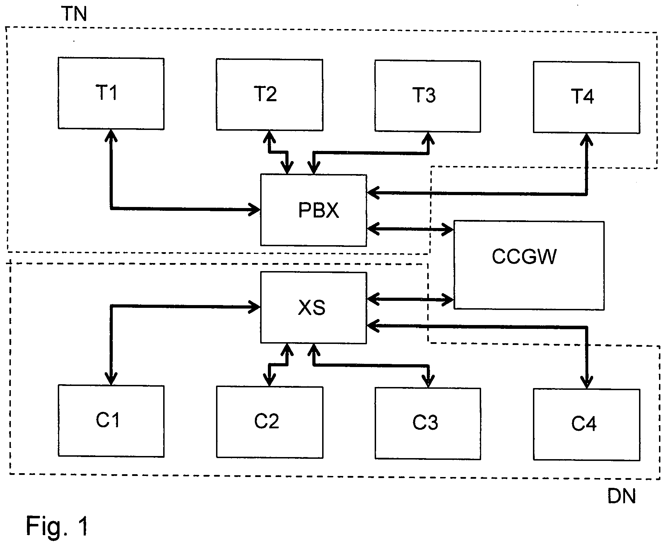

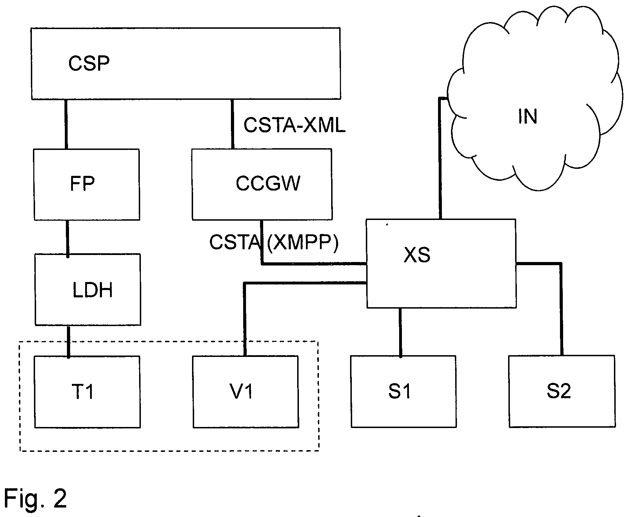

Die Figuren 1 und 2 zeigen schematisch die Einbettung des CCGW in das Gesamtsystem. Figur 2 zeigt insbesondere eine Einbettung des CCGW in das Gesamtsystem.

Wie in Figur 1 gezeigt, erfolgt die Integration von Funktionen eines aus Telekommunikationsendgeräten T1, T2, T3, T4 und einem Vermittlungssystem PBX und ggf. weiteren Komponenten aufgebauten Telekommunikationsnetzes TN in ein Datennetz DN, indem ein Vermittlungssystem PBX des Telekommunikationsnetzes mit einem IM-Server XS des Datennetzes, in dem die Clients C1, C2, C3 und C4 über den IM-Server XS kommunizieren, über ein Gateway CCGW verbunden wird, mit deren Hilfe der IM-Server in die Lage versetzt wird, Computer-Telefonie-Integrations-Dienste des Vermittlungssystems PBX einem Kommunikationsteilnehmer des Datennetzes zur Verfügung zu stellen.

Auf der einen Seite erfolgt die Anbindung an das Feature Processing FP via CSTA XML hier mittels eines sogenannten CSTA Service Providers (CSP). Auf der anderen Seite wird CSTA über XMPP an den XMPP Server XS übertragen. Mittels des CCGW kann ein XMPP Client S1, S2 CTI Dienste abonnieren. Die Kommunikation zwischen dem CCGW und dem XMPP Server kann als eine Server-Server oder Server-Client Anbindung als auch über eine Serverkomponente gemäß XEP 0114 oder einem anderen zu XEP 0114 vergleichbaren Jabber Component Protocol ausgeführt werden.

Der IM-Server XS stellt in dem in der Figur 2 gezeigten Beispiel auch eine Verbindung der Clients S1, S2 zu dem Internet IN her. V1 bezeichnet eine Visualisierung der Kommunikation auf dem Endgerät T1.

Das XMPP-Protokoll kann als typisches Beispiel eines Instant Messaging (IM) Protokolls dienen. XMPP basierende Client/Server Architekturen laufen gemäß dem Stand der Technik asynchron zum Telefon. Eine automatische Überwachung eines CTI-Links innerhalb einer XMPP Umgebung ist gemäß dem Stand der Technik nicht vorgesehen.

Gemäß dem betrachteten Ausführungsbeispiel der Erfindung abonniert der XMPP Client über den XMPP Server CTI Dienste bei einer Vermittlungseinrichtung PBX. Das Vermittlungssystem, "die PBX", stellt diese Funktionalität über ein Call Control Gateway (CCGW) zur Verfügung. Das CCGW stellt ein Gateway von der PBX zum XMPP Netzwerk dar und ist die Verbindung zwischen der CTI einer PBX und dem XMPP Server. Die CTI Dienste selbst - je nach Ausführungsform der Erfindung beispielsweise CSTA Events und CSTA Requests- werden dann über das XMPP Netzwerk als XMPP IQ Nachrichten (sogenannte IQ stanzas) vorzugsweise gemäß RFC 3920bis, ausgetauscht.

Die PBX und der XMPP Server (XS) werden mittels eines Call Control Gateways (CCGW) verbunden. Über dieses Call Control Gateway kann ein XMPP Client CTI Dienste abonnieren und zur Verfügung stellen. Hierbei handelt es sich in einer Ausführungsform um die in ECMA-269 beschriebenen CSTA Call Control Services und Events.

Die Figur 2 zeigt schematisch die Einbettung des CCGW in das Gesamtsystem ausgeführt in Form der OpenScape Office MX und der zugehörigen betroffenen Komponenten. Auf der einen Seite erfolgt die Anbindung an das Feature Processing via CSTA XML. Auf der anderen Seite wird CSTA über XMPP an den XMPP Server (in dem in der Figur 2 gezeigten Ausführungsbeispiel: Openfire) übertragen. Mittels des CCGW kann ein XMPP Client S1, S2 (beispielsweise Spark) CTI Dienste abonnieren. Um den Transport von XML codiertem CSTA über XMPP zu ermöglichen, werden IQ-Stanza um einen <csta/>-Tag erweitert. IQ-Stanza werden zum Transport von CSTA bevorzugt, da sie gegenüber Message-Stanza den Vorteil bieten, dass sie von der Gegenseite quittiert werden.

Die Kommunikation zwischen dem CCGW und dem XMPP Server kann je nach Ausführungsform der Erfindung auf unterschiedliche Weise realisiert werden:
a) durch eine XMPP Server-Server Verbindung, d.h. das CCGW agiert als eigenständiger XMPP Server.
b) durch eine XMPP Client-Server Verbindung oder einem anderen zu XEP 0114 vergleichbaren Jabber Component Protocol, d.h. das CCGW ist als Client im XMPP Server (z.B. Openfire) administriert.
c) als eine Serverkomponente gemäß XEP 0114 oder einem anderen zu XEP 0114 vergleichbaren Jabber Component Protocol, d.h. das CCGW ist eine Serverkomponente des XMPP Servers.

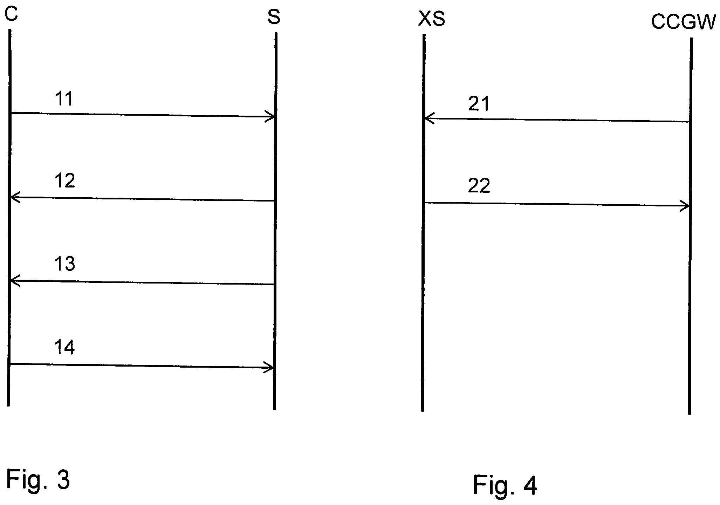

Die Figur 3 zeigt ein Ausführungsbeispiel der Erfindung mit Hilfe eines CSTA MakeCall mit dazugehörigem MakeCallResponse und eines Events inklusive einer Quittierung. Der Client C sendet die Nachricht 11 mit dem Text 11 an den Server S. Der Server S antwortet darauf, indem er die Nachricht 12 mit dem Text 12 an den Client C sendet. Darauf folgend sendet der Server S die Nachricht 13 mit dem Text 13 an den Client C, woraufhin der Client C die Nachricht 14 mit dem Text 14 an den Server S sendet.

Die Texte der Nachrichten sind am Ende der Beschreibung in einer Übersicht zusammengestellt. Durch die Übertragung von CTI Diensten und Nachrichten als IQ-stanzas zwischen dem CCGW und dem XMPP Client (via XMPP Server) wird zudem eine automatische Überwachung des CTI Links vom XMPP Client zu seinem XMPP Server gewährleistet. Ist nämlich diese Verbindung nicht mehr vorhanden (z.B. durch fehlerhaftes LAN Segment), muss der XMPP Server anstelle des adressierten XMPP Clients auf einen IQ stanza request mit einem IQ stanza vom Typ "error" mit dem Wert "service-unavailable" antworten (RFC 3920bis). Dadurch können auf CTI Ebene im Fehlerfall entsprechende Maßnahmen zur Fehlerbehebung am CCGW eingeleitet werden.

Die Figur 4 zeigt ein Ausführungsbeispiel der Erfindung mit Hilfe eines IQ-Stanza Error. Das Gateway CCGW sendet eine Nachricht 21 mit dem Text 21 an den Server XS, worauf der Server XS die Nachricht 22 mit dem Text 22 an das Gateway CCGW sendet. Die Texte der Nachrichten sind am Ende der Beschreibung in einer Übersicht zusammengestellt.

Im Fall einer unerwarteten Trennung werden die eintreffenden Nachrichten im CCGW nicht gespeichert und beim nächsten Anmelden des entsprechenden Nutzers vom CCGW übertragen. Falls nämlich dieser Nutzer einen Monitorpunkt auf ein Device gesetzt hat, so werden ihm die unidirektionalen CSTA-Events zugestellt. Diese Events sind allerdings nur für einen begrenzten Zeitraum von Relevanz. Meldet sich der Nutzer erst Stunden oder gar Tage nach der letzten Trennung wieder beim XMPP-Server an, so ist es vollkommen unerheblich, welche Events während seiner Abwesenheit aufgetreten sind. Vielmehr kann der Versender der CSTA-Events (d.h. das CCGW) durch Erhalt der IQ-Stanza des Typs Error den Monitorpunkt aufheben und somit das Versenden von weiteren, unnötigen XMPP-Nachrichten unterbinden. Als weitere Möglichkeit die Übertragung von CTI Diensten und Nachrichten mittels IQ-stanzas zwischen CCGW und XMPP Client (via XMPP Server) zu starten und/oder zu stoppen, ist die Verwendung von direkten Presence-Nachrichten (sogenannte Directed Presence, RFC 3921bis. Hier sendet der XMPP Client seinen Presence Status (beispielsweise in der Form: unavailable) direkt zum CCGW. Das CCGW kennt dann den Onlinestatus des XMPP Clients und kann entsprechend reagieren. Die Verwendung des Directed Presence Mechanismus hat darüber hinaus den weiteren Vorteil, dass sich das CCGW nicht im Roster (Kontaktliste) des Nutzers befinden muss, um Presence Nachrichten zu bekommen, und so der Nutzer stets nur seine Kontaktliste mit "realen" Usern sieht.

Innerhalb des RFC 3921bis wird das Verhalten eines XMPP-Servers auf den Erhalt verschiedener Nachrichtentypen für unterschiedliche Fälle definiert. Zu den beschriebenen Fällen gehört beispielsweise, dass die Jabber-Id nicht besteht, oder dass die JID besteht, aber die adressierte Resource nicht verfügbar ist. Die Ausführungen dieses RFCs führen XMPP-Servern beim Erhalt einer IQ-Nachricht, die entweder nicht direkt an eine Resource adressiert wird oder wenn die adressierte Resource nicht verfügbar ist, daran, dass der Server mit einem Error vom Typ <serviceunavailable/> antwortet. In diesem Fall könnte ein Error auf IQ stanza request vom Typ CSTA-Event automatisch den CSTA Monitorpunkt stoppen bzw. anhalten.

Es können auch sogenannte XMPP Direkte Presencenachrichten (RFC 3921bis) genutzt werden um das Gateway CCGW über den Onlinestatus seiner Clients zu informieren, und zwar auch wenn sich das CCGW nicht im Roster des Nutzers befindet. Um dies zu erreichen müsste der Client eine Presencenachricht direkt an das CCGW adressieren. Wird die XMPP Client-Server Verbindung kontrolliert abgebaut (d.h. der User schließt die XMPP Client Applikation), sendet die Client Application ein Presence stanza des Types "unavailable" zu seinem XMPP Server. Dieses Presence stanza muss laut RFC 3921bis vom XMPP Server auch zu den XMPP Endpunkten geschickt werden, die vorher von der Client Applikation mit direkten Presence Nachrichten versorgt wurden (d.h. also auch zum CCGW). Das CCGW kann dann den CSTA Monitorpunkt im CCGW stoppen. Da der XMPP Server die XMPP Verbindung zu seinen XMPP Clients überwacht, bemerkt der XMPP Server auch, ob die Verbindung zu einem XMPP Client unkontrolliert verloren wurde (z.B. durch Ausfall des entsprechenden LAN Segmentes). Da nun dieser XMPP Client nicht mehr erreichbar ist, erhält er den Status "unavailable". Dies muss der XMPP Server mit einem Presence stanza des Typs "unavailable" aber auch selbstständig jenen XMPP Entities mitteilen, die vorher nur "Directed Presence" stanzas von diesem Client bekommen haben (also somit auch dem CCGW) (siehe RFC
3921bis).

In beiden Fällen (d.h. bei kontrollierter bzw. unkontrollierter Abbruch der XMPP Client-Server-Verbindung) kann also mit Hilfe der Funktionalität "Directed Presence" gemäß RFC 3921bis automatisch der CSTA Monitorpunkt im CCGW gestoppt bzw. angehalten werden.

Die zitierten Dokumente können im Internet wie folgt aufgefunden werden:
RFC 3920bis19 http://tools.ietf.org/wg/xmpp/draft-ietf-xmpp-3920bis/
RFC 3921bis17 http://tools.ietf.org/wg/xmpp/draft-ietf-xmpp-3921bis/
Hierbei wird angenommen, dass 3920bis19 und 3921bis17 die bestehenden RFC 3920 und RFC 3921 ersetzen.

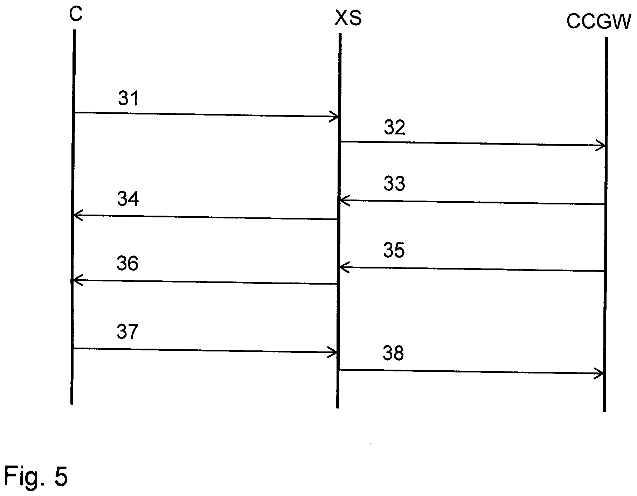

Die Figuren 5 bis 9 zeigen weitere Ausführungsbeispiele der Erfindung, bei denen die Verbindung zwischen CCGW und XMPP Server als Client-Server Verbindung realisiert ist. Das Gateway CCGW ist in diesen Fällen vorzugsweise ebenfalls als XMPP Client am XMPP Server administriert. Figur 5 zeigt die Übertragung von CSTA Services und Events. Der Client C ist vorzugsweise ein XMPP-Client, der Server S ein XMPP Server, der eine reine passive Rolle als Router übernimmt.

Der Client C sendet eine Nachricht 31 mit dem Text 31 an den Server XS, woraufhin der Server XS eine Nachricht 32 mit dem Text 32 an das Gateway CCGW sendet. Das Gateway CCGW sendet nun eine Nachricht 33 mit dem Text 33 an den Server XS, woraufhin der Server eine Nachricht 34 mit dem Text 34 an den Client sendet. Anschließend sendet das Gateway CCGW eine Nachricht 35 mit dem Text 35 an den Server, woraufhin der Server eine Nachricht 36 mit den Text 36 an den Client C sendet. Schließlich sendet der Client C eine Nachricht 37 mit den Text 37 an den Server, woraufhin der Server eine Nachricht 38 mit dem Text 38 an das Gateway CC GW sendet.

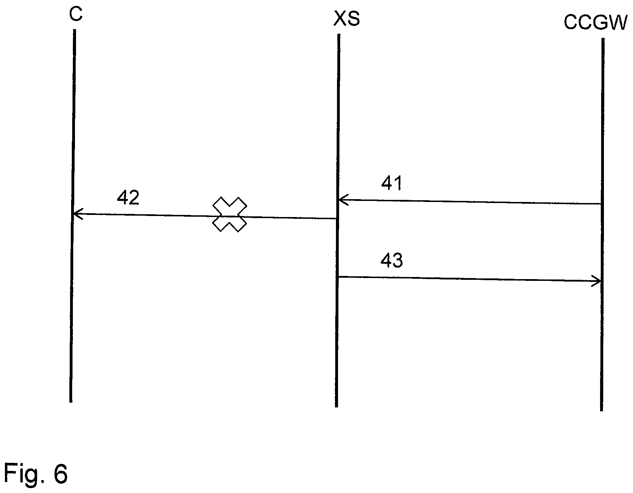

Figur 6 zeigt das Verhalten bei nicht vorhandenem Client. Das Gateway CCGW sendet eine Nachricht 41 mit dem Text 41 an den Server XS, woraufhin der Server XS eine Nachricht 43 mit dem Text 43 an das Gateway CCGW sendet. Das Versenden einer Nachricht 42 von dem Server an den Client C unterbleibt hier. Hier übernimmt der XMPP Server eine aktive Rolle, da keine "end-to-end"-Verbindung (mehr) besteht.

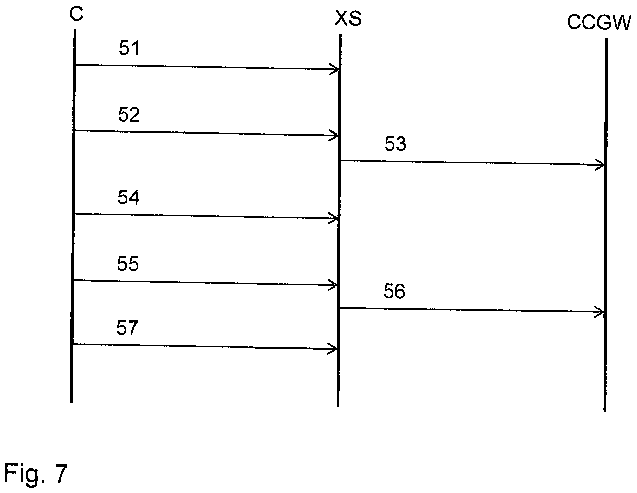

Figur 7 zeigt ein weiteres Ausführungsbeispiel der Erfindung anhand der Nutzung direkter Presencenachrichten. Hierbei hat der XMPP-Client die Adresse test@example.com/test, der Server S ist ein XMPP Server, und das Gateway CCGW ist als XMPP Client mit der Adresse ccgw@example.com/ccgw eingerichtet. Der Client C sendet eine Nachricht 51 mit dem Text 51 und anschließend eine Nachricht 52 mit dem Text 52 an den Server. Daraufhin sendet der Server eine Nachricht 53 mit dem Text 53 an das Gateway CCGW. Der Client C sendet dann eine Nachricht 54 mit dem Text 54 und anschließend eine Nachricht 55 mit dem Text 55 an den Server. Daraufhin sendet der Server eine Nachricht 56 mit dem Text 56 an das Gateway CCGW. Schließlich sendet der Client C eine Nachricht 57 mit dem Text 57 an den Server. In diesem Beispiel sendet der XMPP Client zur An- und Abmeldung den direkten Präsenz-Status an das Gateway CCGW.

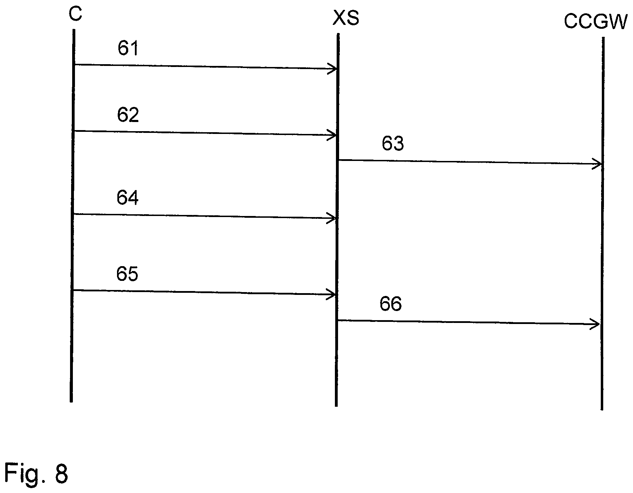

In dem in Figur 8 gezeigten Ausführungsbeispiel hat der XMPP-Client C die Adresse test@example.com/test, der Server S ist ein XMPP Server, und das Gateway CCGW ist als XMPP Client mit der Adresse ccgw@example.com/ccgw eingerichtet. Bei einer Abmeldung ohne direkten Präsenz-Status vom Client übernimmt der Server diese Aufgabe. Der Client C sendet eine Nachricht 61 mit dem Text 61 und eine Nachricht 62 mit dem Text 62 an den Server, woraufhin der Server eine Nachricht 63 mit dem Text 63 an das Gateway CCGW sendet. Der Client C sendet dann eine Nachricht 64 mit dem Text 64 und eine Nachricht 65 mit dem Text 65 an den Server, woraufhin der Server eine Nachricht 63 mit dem Text 66 an das Gateway CCGW sendet.

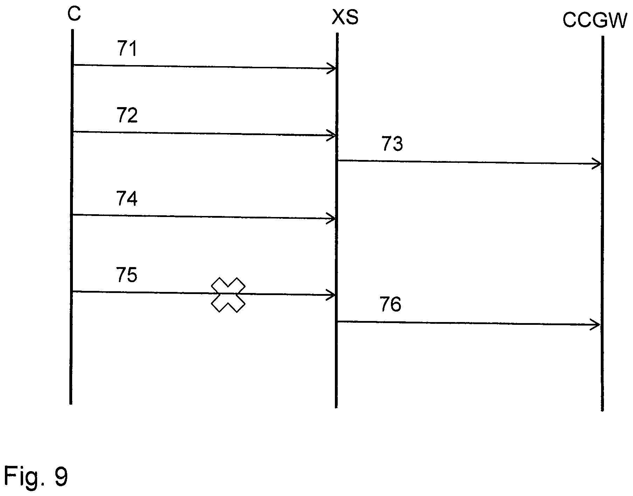

In dem in Figur 9 gezeigten Ausführungsbeispiel hat der XMPP-Client C die Adresse test@example.com/test, der Server S ist ein XMPP Server, und das Gateway CCGW ist als XMPP Client mit der Adresse ccgw@example.com/ccgw eingerichtet. Bei Verbindungsunterbrechung zwischen Client und Server muss der Server den direkten Präsenz-Status senden.
Der Client C sendet eine Nachricht 71 mit dem Text 71 und eine Nachricht 72 mit dem Text 72 an den Server, woraufhin der Server eine Nachricht 73 mit dem Text 73 an das Gateway CCGW sendet. Der Client C sendet dann eine Nachricht 74 mit dem Text 74 Server, woraufhin der Server eine Nachricht 76 mit dem Text 76 an das Gateway CCGW sendet. Das Senden der Nachricht 75 von dem Client C an den Server S unterbleibt in diesem Fall.

Nachstehend ist eine Liste der in der Beschreibung verwendeten Nachrichtentexte beigefügt, die ausdrücklicher Bestandteil der vorliegenden Beschreibung ist.

Text 11:

```
 <iq from="test@example.com/test" to="ccgw@example.com/ccgw"
 xml:lang="en"
 id="123456" type="set">
 <csta xmlns="csta" version="1.0" encoding="UTF-8">
 <MakeCall xmlns="http://www.ecma-...
```

Text 12:

```
 <iq from="ccgw@example.com/ccgw" to="test@example.com/test"
 xml:lang="en"
 id="123456" type="result">
 <csta xmlns="csta" version="1.0" encoding="UTF-8">
 <MakeCallResponse xmlns="http://www.ecma-...
```

Text 13:

```
 <iq from="ccgw@example.com/ccgw" to="test@example.com/test"
 xml:lang="en"
 id="234567" type="set">
 <csta xmlns="csta" version="1.0" encoding="UTF-8">
 <ServiceInitiatedEvent xmlns="http://www.ecma-
```

Text 14:

```
 <iq from="test@example.com/test" to="ccgw@example.com/ccgw"
 xml:lang="en"
 id="234567" type="result" />
```

Text 21:

```
 <iq to="seb@wit0234c/seb1" type="set"
 from="ccgw@wit0234c/ccgw"
 xmlns="jabber:client" id="as234sfd">
 <csta xmlns="csta" version="1.0" encoding="UTF-8">
 <EstablishedEvent xmlns:csta="http://www.ecma-...
 </EstablishedEvent>
 </csta>
 </iq>
```

Text 22:

```
 <iq from="seb@wit0234c/seb1" to="ccgw@wit0234c/ccgw"
 type="error"
 id="as234sfd">
 <csta xmlns="csta" version="1.0" encoding="UTF-8">
 <EstablishedEvent xmlns:csta="http://www.ecma-...
 </csta>
 <error code="503" type="cancel">
 <service-unavailable
 xmlns="urn:ietf:params:xml:ns:xmppstanzas"/>
 </error>
 </iq>
```

Text 31:

```
 <iq from="test@example . com/test" to="ccgw@example.
 com/ccgw"
 id="123456" type-"set" >
 <csta xmlns="csta" version="l.O" encoding="UTF- 8" >
 <MakeCall xmlns="http://www . ecma- ...
```

Text 32:

```
 <iq from="test@example.com/test" to="ccgw@example.com/ccgw"
 id="123456" type="set" >
 <csta xmlns-"csta" version-"I.O" encoding-"UTF- 8" >
 <MakeCall xmlns-"http://www.ecma- ...
```

Text 33:

```
 <iq from="ccgw@example.com/ccgw" to="test@example.com/test"
 id="123456" type="result" >
 <csta xmlns="csta" version="1.0" encoding="UTF- 8" >
 <MakeCallResponse xmlns-"http://www.ecma- ...
```

Text 34:

```
 <iq from="ccgw@example.com/ccgw" to="test@example.com/test"
 id="123456" type="result" >
 <csta xmlns="csta" version="l.O" encoding="UTF- 8" >
 <MakeCallResponse xmlns-"http://www.ecma- ...
```

Text 35:

```
 <iq from="ccgw@example . com/ccgw" to="test@example .
 com/test"
 id-"234567" type-"set" >
 <csta xmlns="csta" version="l.O" encoding="UTF- 8" >
 <ServiceInitiatedEvent xmlns="http://www.ecma- ...
```

Text 36:

```
 <iq from="ccgw@example.com/ccgw" to="test@example.com/test"
 id="234567" type="set" >
 <csta xmlns="csta" version="l.O" encoding= "UTF- 8" >
 <ServiceInitiatedEvent xmlns="http : //www . ecma- ...
```

Text 37:

```
 <iq from-"test@example.com/test" to-"ccgw@example .
 com/ccgw"
 id="234567" type="result" / >
```

Text 38:

```
 <iq from-"test@example.com/test" to-"ccgw@example.com/ccgw"
 id="234567" type="result" / >
```

Text 41 = Text 35

Text 43:

```
 <iq from= "test@example . com/test" to= "ccgw@example .
 com/ccgw"
 id= "234567" type= "error" >
 <csta xmlns= "csta" version="l.O" encoding="UTF- 8" >
 <ServiceInitiatedEvent xmlns= "http://www.ecma- ..
 </csta>
 <error code= "503" type= "cancel" >
 <service- unavailable xmlns= "urn : ietf : params : xml : .
 .. " />
 </error>
 </iq>
```

Text 51:

```
 <presence/>
```

Text 52:

```
 <presence to= "ccgw@example . com/ccgw" />
```

Text 53:

```
 <presence from= "test@example . com/test"
 to= "ccgw@example . com/ccgw" />
```

Text 54:

```
 <presence>
 <show>away</show>
 <status>gone fishing</status>
 </presence>
```

Text 55:

```
 <presence to= "ccgw@example . com/ccgw" type= "unavailable"
 / >
```

Text 56:

```
 <presence from= "test@example.com/test"
 to= "ccgw@example.com/ccgw" type= "unavailable" / >
```

Text 57:

```
 <presence type= "unavailable" / >
```

Text 61 = Text 51 = Text 71

Text 62 = Text 52 = Text 72

Text 63 = text 53 = Text 73

Text 64 = Text 54 = Text 74

Text 65 = Text 57

Text 66 = Text 56 = Text 76

Die Erfindung ist nicht auf die geschilderten Ausführungsbeispiele beschränkt; der Fachmann kann anhand der hier gegebenen Beschreibung weitere Ausführungsbeispiele der Erfindung auffinden.

## Patentansprüche

1. Verfahren zur automatischen Überwachung einer Verbindung (CTI-L) eines Vermittlungssystems (PBX) in einem Telekommunikationsnetz (TN) mit einem Datennetz (DN), bei dem ein Kommunikationsteilnehmer des Datennetzes als XMPP-Client über eine Computer-Telefonie-Integrations-Dienst-Verbindung (CTI-L) mit einem XMPP-Server des Datennetzes verbunden ist, und bei dem ein Vermittlungssystem (PBX) des Telekommunikationsnetzes mit dem XMPP-Server (XS) über ein Gateway (CCGW) verbunden wird, das mittels CSTA XML an das Vermittlungssystem (PBX) angebunden wird und mit dessen Hilfe der XMPP-Server in die Lage versetzt wird, Computer-Telefonie-Integrations-Dienste des Vermittlungssystems (PBX) dem XMPP-Client zur Verfügung zu stellen, wobei CSTA Events und CSTA Requests als XMPP-IQ-Nachrichten, IQ-Stanzas, zwischen dem Gateway und dem XMPP Client übertragen werden, wobei Computer-Telefonie-Integrations-Dienste und Nachrichten mit Hilfe eines Request/Response-Mechanismus übertragen werden, der im Fehlerfall eine Fehlermeldung an den Absender vorsieht, wobei IQ-Stanzas für den Request/Response-Mechanismus verwendet werden, wobei im Falle, dass die Verbindung zwischen XMPP-Server und dem XMPP-Client nicht mehr vorhanden ist, auf eine IQ-Stanza-Request des Gateways (CCGW) der XMPP-Server anstelle des XMPP-Clients ein IQ-Stanza vom typ "error" mit dem Wert "service unavailable" als Antwort aussendet, oder falls direkte Präsenznachrichten verwendet werden, um das Gateway (CCGW) über den Onlinestatus seiner Clients zu informieren, und die XMPP Client-Server Verbindung kontrolliert abgebaut wird, eine XMPP Client Applikation ein Presence Stanza des Typs "unavailable" zu seinem XMPP Server sendet ohne dass das Stanza direkt an das Gateway adressiert ist, der XMPP Server das Stanza auch zum Gateway schickt.

2. Verfahren nach einem der vorhergehenden Ansprüche, bei dem der XMPP-Server in die Lage versetzt wird, Computer-Telefonie-Integrations-Dienste des Vermittlungssystems (PBX) einem Kommunikationsteilnehmer des Datennetzes zur Verfügung zu stellen, indem er den XMPP-Client (XC) in die Lage versetzt, solche Computer-Telefonie-Integrations-Dienste des Vermittlungssystems (PBX) zu abonnieren.

3. Verfahren nach einem der vorhergehenden Ansprüche, bei dem das Gateway (CCGW) eine Zuordnung zwischen einer CSTA-spezifischen InvokeID (CSTA-IID) einerseits und einem Jabber-Identifier (JID) des IM-Clients und/oder einer XMPP-SessionID (XSID) bewirkt.

4. Verfahren nach einem der vorhergehenden Ansprüche, bei dem die Kommunikation zwischen dem Gateway (CCGW) und dem XMPP-Server als eine Server-Server-Anbindung ausgeführt wird.

5. Verfahren nach einem der vorhergehenden Ansprüche, bei dem die Kommunikation zwischen dem Gateway (CCGW) und dem XMPP-Server als eine Server-Client-Anbindung ausgeführt wird.

6. Verfahren nach einem der vorhergehenden Ansprüche, bei dem die Kommunikation zwischen dem Gateway (CCGW) und dem XMPP-Server über eine Serverkomponente gemäß XEP 0114 oder einem anderen zu XEP 0114 vergleichbaren Jabber-Component-Protocol ausgeführt wird.

7. Verfahren nach einem der vorhergehenden Ansprüche, bei dem zur Zuordnung eines Requests zur zugehörigen Response die sogenannte Invoke-ID verwendet wird.

8. Verfahren nach Anspruch 5, bei dem die zur Zuordnung eines Requests zur zugehörigen Response verwendete Invoke-ID über alle Requests eindeutig ist.

9. Verfahren nach einem der vorhergehenden Ansprüche, bei dem zum Transport von CSTA über XMPP IQ-Stanzas verwendet werden, die einen Request-Response-Mechanismus aufweisen, der dem von CSTA verwendeten Request-Response-Mechanismus vergleichbar ist.

10. Verfahren nach einem der vorhergehenden Ansprüche, bei dem ein IM-Client eine XMPP-Session-ID generiert, die von anderen XMPP-Session-IDs desselben IM-Clients verschieden ist.

## Claims

1. A method for automatic monitoring of a connection (CTI-L) of an exchange system (PBX) in a telecommunication network (TN) with a data network (DN), in which a communication subscriber of the data network as XMPP client is connected via a computer-telephone-integration service connection (CTI-L) to an XMPP server of the data network, and in which an exchange system (PBX) of the telecommunication network is connected to the XMPP server (XS) via a gateway (CCGW), which is connected by means of CSTA XML to the exchange system (PBX) and by means of which the XMPP server is enabled to make computer-telephone-integration services of the exchange system (PBX) available to the XMPP client, wherein CSTA events and CSTA requests are transmitted as XMPP-IQ messages, IQ stanzas, between the gateway and the XMPP client, wherein computer-telephone-integration services and messages are transmitted by means of a request/response mechanism which, in the case of error, provides an error message to the sender, wherein IQ stanzas are used for the request/response mechanism, wherein in the case in which the connection between XMPP server and the XMPP client is no longer present, upon an IQ-stanza request of the gateway (CCGW), the XMPP server in place of the XMPP client transmits an IQ stanza of the "error" type with the value "service unavailable" as response, or, if direct presence messages are used in order to inform the gateway (CCGW) concerning the online status of its clients, and the XMPP client server connection is terminated in a controlled manner, an XMPP client application transmits a presence stanza of the type "unavailable" to its XMPP server without the stanza being addressed directly to the gateway, the XMPP server also sends the stanza to the gateway.

2. The method according to any one of the preceding claims, in which the XMPP server is enabled to make computer-telephone-integration services of the exchange system (PBX) available to a communication subscriber of the data network, in that it enables the XMPP client (XC) to subscribe to such computer-telephone-integration services of the exchange system (PBX).

3. The method according to any one of the preceding claims, in which the gateway (CCGW) establishes an association between a CSTA-specific InvokeID (CSTA-IID), on the one hand, and a jabber identifier (JID) of the IM client and/or of an XMPP-SessionID (XSID).

4. The method according to any one of the preceding claims, in which the communication between the gateway (CCGW) and the XMPP server is implemented as a server-server connection.

5. The method according to any one of the preceding claims, in which the communication between the gateway (CCGW) and the XMPP server is implemented as a server-client connection.

6. The method according to any one of the preceding claims, in which the communication between the gateway (CCGW) and the XMPP server is implemented via a server component according to XEP 0114 or another jabber component protocol similar to XEP 0114.

7. The method according to any one of the preceding claims, in which the so-called Invoke-ID is used for the association of a request with the corresponding response.

8. The method according to Claim 5, in which the Invoke ID used for the association of a request with the corresponding response is unequivocal over all the requests.

9. The method according to any one of the preceding claims, in which, for the transport of CSTA via XMPP, IQ stanzas are used, which have a request-response mechanism which is similar to the request-response mechanism used by the CSTA.

10. The method according to any one of the preceding claims, in which an IM client generates an XMPP-Session-ID which is different from other XMPP-Session-IDs of the same IM client.

## Revendications

1. Procédé de surveillance automatique d'une liaison (CTI-L) d'un système d'autocommutateur (PBX) dans un réseau de télécommunication (TN) avec un réseau de données (DN), selon lequel un participant de communication du réseau de données est relié en tant que client XMPP, par le biais d'une liaison de service de couplage de la téléphonie et de l'informatique (CTI-L), à un serveur XMPP du réseau de données, et selon lequel un système d'autocommutateur (PBX) du réseau de télécommunication est relié au serveur XMPP (XS) par le biais d'une passerelle (CCGW) qui est connectée au moyen d'un CSTA XML au système d'autocommutateur (PBX) et à l'aide de laquelle le serveur XMPP est mis en mesure de mettre à disposition des services de couplage de la téléphonie et de l'informatique du système d'autocommutateur (PBX) au client XMPP, dans lequel des événements CSTA et des demandes CSTA sont transmises, en tant que messages XMPP-IQ, stances IQ, entre la passerelle et le client XMPP, dans lequel des services de couplage de la téléphonie et de l'informatique et des messages sont transmis à l'aide d'un mécanisme demande/réponse qui, en cas d'erreur, prévoit une annonce d'erreur à l'expéditeur, dans lequel sont employées des stances IQ pour le mécanisme demande/réponse, dans lequel, dans le cas où la liaison n'est plus présente entre un serveur XMPP et le client XMPP, sur une demande de stance IQ de la passerelle (CCGW), le serveur XMPP au lieu du client XMPP envoie une stance IQ du type « erreur » avec la valeur « service indisponible » en tant que réponse, ou sinon des messages directs de présence sont employés pour informer la passerelle (CCGW) sur l'état en ligne de son client, et la liaison client-serveur XMPP est supprimée de manière contrôlée, une application client XMPP envoie une stance de présence du type « non disponible » à son serveur XMPP sans que la stance soit adressée directement à la passerelle, le serveur XMPP envoie également la stance à la passerelle.

2. Procédé selon l'une quelconque des revendications précédentes, selon lequel le serveur XMPP est mis en mesure de mettre à disposition des services de couplage de la téléphonie et de l'informatique du système d'autocommutateur (PBX) à un participant de communication du réseau de données par le fait qu'il met le client XMPP (XC) en mesure de s'abonner à de tels services de couplage de la téléphonie et de l'informatique du système d'autocommutateur (PBX).

3. Procédé selon l'une quelconque des revendications précédentes, selon lequel la passerelle (CCGW) réalise une affectation entre d'une part un identifiant Invoke spécifique à CSTA (CSTA-IID) et un identifiant Jabber (JID) du client IM et/ou d'un identifiant de session XMPP (XSID).

4. Procédé selon l'une quelconque des revendications précédentes, selon lequel la communication entre la passerelle (CCGW) et le serveur XMPP est exécutée en tant que connexion serveur-serveur.

5. Procédé selon l'une quelconque des revendications précédentes, selon lequel la communication entre la passerelle (CCGW) et le serveur XMPP est exécutée en tant que connexion serveur-client.

6. Procédé selon l'une quelconque des revendications précédentes, selon lequel la communication entre la passerelle (CCGW) et le serveur XMPP est exécutée par le biais d'un composant de serveur selon XEP 0114 ou selon un autre protocole de composant Jabber comparable à XEP 0114.

7. Procédé selon l'une quelconque des revendications précédentes, selon lequel l'identifiant dit Invoke est employé pour l'affectation d'une demande à la réponse associée.

8. Procédé selon la revendication 5, selon lequel l'identifiant Invoke employé pour l'affectation d'une demande à la réponse associée est univoque pour toutes les demandes.

9. Procédé selon l'une quelconque des revendications précédentes, selon lequel pour le transport de CSTA via XMPP sont employées des stances IQ qui comprennent un mécanisme demande-réponse qui est comparable au mécanisme demande-réponse employé par CSTA.

10. Procédé selon l'une quelconque des revendications précédentes, selon lequel un client IM génère un identifiant de session XMPP qui est différent d'autres identifiants de session XMPP du même client IM.
